(19)

**Europäisches Patentamt**
**European Patent Office**
**Office européen des brevets**

(11) **EP 3 783 044 A1**

(12) **EUROPÄISCHE PATENTANMELDUNG**

(43) Veröffentlichungstag:
**24.02.2021  Patentblatt 2021/08**

(21) Anmeldenummer: **19192406.7**

(22) Anmeldetag: **19.08.2019**

(51) Int Cl.:
**C08G 64/30** (2006.01)      **C08G 18/44** (2006.01)
**C08G 65/26** (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **VERFAHREN ZUR HERSTELLUNG VON POLYETHERCARBONATPOLYOLEN**

(57)    Gegenstand der Erfindung ist ein Verfahren zur Herstellung von Polyethercarbonatpolyolen durch Anlagerung von cyclischem Propylencarbonat an eine H-funktionelle Startersubstanz in Anwesenheit eines Katalysators, dadurch gekennzeichnet, dass
als Katalysator mindestens eine Verbindung gemäß der Formel

$$M_nX \qquad (I),$$

wobei
M ausgewählt ist aus den Alkalimetallkationen $Li^+$, $Na^+$, $K^+$ und $Cs^+$,
X ausgewählt ist aus den Anionen $VO_3^-$, $WO_4^{2-}$, $MoO_4^{2-}$ und $VO_4^{3-}$,
n ist 1, wenn $X = VO_3^-$,
n ist 2, wenn $X = WO_4^{2-}$ oder $MoO_4^{2-}$,
n ist 3, wenn $X = VO_4^{3-}$,
eingesetzt wird.

EP 3 783 044 A1

**Beschreibung**

Die vorliegende Erfindung betrifft ein Verfahren zur Herstellung von Polyethercarbonatpolyolen durch katalytische Anlagerung von cyclischen Propylencarbonat (cPC) an eine H-funktionelle Startersubstanz.

Es ist bekannt, dass cyclische Carbonate, wie z.B. cyclisches Propylencarbonat, als Monomer in der Herstellung von Polycarbonatpolyolen eingesetzt werden können. Diese Umsetzung basiert auf einer Umesterung und wird in Anwesenheit von Katalysatoren wie beispielsweise Titan-Verbindungen, wie Titandioxid oder Titantetrabutylat (EP 0 343 572), Zinn-Verbindungen, wie Zinndioxid oder Dibutylzinnoxid (DE 2 523 352), oder Alkalimetallcarbonate oder -acetate (DE 1 495 299 A1) durchgeführt. In diesen Verfahren werden jedoch die eingesetzten Carbonate und Alkohole abwechselnd eingebaut und somit alternierende Polycarbonatpolyole erhalten. Diese alternierenden Polycarbonatpolyole enthalten keine Ethergruppen. Zusätzlich besitzen diese Katalysatoren den Nachteil, dass bei den üblichen Reaktionstemperaturen von 150°C bis 230°C Nebenprodukte wie Ethylenglykol oder Propylenglykol gebildet werden. Diese Nebenprodukte sind thermisch schwer abtrennbar und deshalb im Sinne eines wirtschaftlichen Verfahrens nicht wünschenswert.

In der Veröffentlichung von Harris ("Harris, R. F.: Structural Features of Poly(alkylene Ether Carbonate) Diol Oligomers by Capillary Gas Chromatography, Journal of Applied Polymer Science, 1989, 37, S. 183-200") wird die Herstellung von Poly(ethylenethercarbonat)diolen durch die Anlagerung von cyclischen Ethylencarbonat an Monoethylenglykol oder Diethylenglykol in Anwesenheit von verschiedenen Katalysatoren, unter anderem auf Basis von Vanadium, hergestellt. Es wird in der Veröffentlichung von Harris kein cyclisches Propylencarbonat erwähnt.

Die ringöffnende Polymerisation von cPC ist beispielsweise von Soga et al. bekannt ("K. Soga, Y. Tazuke, S. Hosada, S. Ikeda: Polymerization of Propylene Carbonate, J. Polym. Sci., 1977, 15, S. 219-229"). Im Gegensatz zu der ringöffnenden Polymerisation cyclischen Ethylencarbonats (cEC) entstehen bei der Polymerisation von cPC jedoch unerwünschte doppelbindungshaltige Nebenprodukte wobei lange Reaktionszeiten von 72-100 Stunden, sowie hohe Temperaturen für die Polymerisation notwendig sind ("G. Rokicki: Aliphatic cyclic carbonates and spiroorthocarbonates as monomers, Prog. Polym. Sci., 2000, 25, S. 259-342").

Die der vorliegenden Erfindung zu Grunde liegende Aufgabe bestand deshalb darin, die Bildung von Nebenprodukten bei der Verwendung von cyclischen Propylencarbonat als Monomer für die Herstellung von Polyethercarbonatpolyolen zu verringern.

Überraschend wurde gefunden, dass die technische Aufgabe gelöst wird durch ein Verfahren zur Herstellung von Polyethercarbonatpolyolen durch Anlagerung von cyclischen Propylencarbonat an eine H-funktionelle Startersubstanz in Anwesenheit eines Katalysators, dadurch gekennzeichnet, dass als Katalysator mindestens eine Verbindung gemäß der Formel

$$M_nX \qquad (I),$$

wobei

M ausgewählt ist aus den Alkalimetallkationen $Li^+$, $Na^+$, $K^+$ und $Cs^+$,
X ausgewählt ist aus den Anionen $VO_3^-$, $WO_4^{2-}$, $MoO_4^{2-}$ und $VO_4^{3-}$,
n ist 1, wenn $X = VO_3^-$,
n ist 2, wenn $X = WO_4^{2-}$ oder $MoO_4^{2-}$,
n ist 3, wenn $X = VO_4^{3-}$,

eingesetzt wird.

Bei dem Verfahren kann zunächst eine H-funktionelle Startersubstanz und cyclisches Propylencarbonat im Reaktor vorgelegt werden. Es kann dabei auch nur eine Teilmenge der H-funktionellen Startersubstanz und/oder eine Teilmenge cyclischen Propylencarbonats im Reaktor vorgelegt werden. Anschließend wird gegebenenfalls die für die ringöffnende Polymerisation benötigte Menge an Katalysator in den Reaktor gegeben. Die Reihenfolge der Zugabe ist dabei nicht entscheidend. Es kann auch erst der Katalysator und anschließend eine H-funktionelle Startersubstanz und cyclisches Propylencarbonat in den Reaktor gefüllt werden. Alternativ kann auch erst der Katalysator in einer H-funktionellen Startersubstanz suspendiert und anschließend die Suspension in den Reaktor gefüllt werden.
Der Katalysator wird vorzugsweise in einer Menge eingesetzt, so dass der Gehalt an Katalysator im resultierenden Reaktionsprodukt 10 bis 50000 ppm, besonders bevorzugt 20 bis 30000 ppm und höchst bevorzugt 50 bis 20000 ppm beträgt.

In einer bevorzugten Ausführungsform wird in das resultierende Gemisch aus (a) einer Teilmenge H-funktioneller Startersubstanz, (b) Katalysator und (c) cyclischen Propylencarbonats bei einer Temperatur von 20°C bis 120°C, besonders bevorzugt von 40°C bis 100°C Inertgas (beispielsweise Argon oder Stickstoff) eingeleitet.
In einer alternativen bevorzugten Ausführungsform wird das resultierende Gemisch aus (a) einer Teilmenge H-funktioneller Startersubstanz, (b) Katalysator und (c) cyclischen Propylencarbonats bei einer Temperatur von 20°C bis 120°C, besonders bevorzugt von 40°C bis 100°C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff), beaufschlagt und jeweils anschließend der Überdruck auf ca. 1 bar (absolut) reduziert.

Der Katalysator kann in fester Form oder als Suspension in cyclischen Propylencarbonat, in H-funktioneller Startersubstanz oder in einer Mischung aus den genannten zugegeben werden.

In einer weiteren bevorzugten Ausführungsform wird in einem ersten Schritt eine Teilmenge der H-funktionellen Startersubstanzen und cyclisches Propylencarbonat vorgelegt und in einem anschließenden zweiten Schritt die Temperatur der Teilmenge H-funktioneller Startersubstanz und des cyclischen Propylencarbonats auf 40°C bis 120°C, bevorzugt 40°C bis 100°C gebracht und/oder der Druck im Reaktor auf weniger als 500 mbar, bevorzugt 5 mbar bis 100 mbar erniedrigt, wobei gegebenenfalls ein Inertgas-Strom (beispielsweise von Argon oder Stickstoff) angelegt wird und der Katalysator zur Teilmenge H-funktioneller Startersubstanz im ersten Schritt oder unmittelbar anschließend im zweiten Schritt zugesetzt wird.

Das resultierende Reaktionsgemisch wird dann bei einer Temperatur von 130°C bis 230°C, bevorzugt 140°C bis 200°C, besonders bevorzugt 160°C bis 190°C erhitzt, wobei gegebenenfalls ein Inertgas-Strom (beispielsweise von Argon oder Stickstoff) durch den Reaktor geleitet werden kann. Die Reaktion wird solange fortgeführt bis bei der eingestellten Temperatur keine Gasentwicklung mehr beobachtet wird. Die Reaktion kann ebenfalls unter Druck durchgeführt werden, bevorzugt bei einem Druck von 50 mbar bis 100 bar (absolut), besonders bevorzugt 200 mbar bis 50 bar (absolut), insbesondere bevorzugt 500 mbar bis 30 bar (absolut).

Wurde nur eine Teilmenge an H-funktioneller Startersubstanz und/oder eine Teilmenge an cyclischen Propylencarbonats in den Reaktor vorgelegt, erfolgt die Dosierung der restlichen Menge an H-funktioneller Startersubstanz und/oder cyclischen Propylencarbonats in den Reaktor kontinuierlich. Es ist möglich, das cyclische Propylencarbonat mit konstanter Dosierrate zu dosieren oder die Dosierrate allmählich oder schrittweise zu steigern oder zu senken oder das cyclische Propylencarbonat portionsweise zuzugeben. Bevorzugt wird das cyclische Propylencarbonat mit konstanter Dosierrate dem Reaktionsgemisch zugegeben. Die Dosierung des cyclischen Propylencarbonats bzw. der H-funktionellen Startersubstanzen kann simultan oder sequentiell über jeweils separate Dosierungen (Zugaben) erfolgen oder über eine oder mehrere Dosierungen, wobei die H-funktionellen Startersubstanzen einzeln oder als Gemisch dosiert werden kann.

In dem Verfahren kann gegebenenfalls zusätzlich zu dem cyclischen Propylencarbonat weiteres cyclisches Carbonat in einem Anteil von höchstens 20 Gew.-%, bevorzugt höchstens 10 Gew.-%, besonders bevorzugt höchstens 5 Gew.-%, jeweils bezogen auf die Summe des Gesamtgewichts an eingesetztem cyclischen Carbonat, eingesetzt werden. Als weiteres cyclisches Carbonat wird bevorzugt Ethylencarbonat eingesetzt. Es ist jedoch ganz besonders bevorzugt, dass nur cyclisches Propylencarbonat eingesetzt wird.

Die Polyethercarbonatpolyole können in einem batch, semi-batch oder kontinuierlichen Verfahren hergestellt werden. Bevorzugt werden die Polyethercarbonatpolyole in einem kontinuierlichen Verfahren hergestellt, das sowohl eine kontinuierliche Polymerisation als auch eine kontinuierliche Zugabe der H-funktionellen Startersubstanz umfasst. Gegenstand der Erfindung ist daher auch ein Verfahren, wobei H-funktionelle Startersubstanz, cyclisches Propylencarbonat sowie Katalysator kontinuierlich in den Reaktor dosiert werden und wobei das resultierende Reaktionsgemisch (enthaltend das Reaktionsprodukt) kontinuierlich aus dem Reaktor entfernt wird. Vorzugsweise wird dabei der Katalysator in H-funktioneller Startersubstanz suspendiert kontinuierlich zugegeben.

Der hier verwendete Begriff "kontinuierlich" kann als Modus der Zugabe eines relevanten Katalysators oder Reaktanden so definiert werden, dass eine im Wesentlichen kontinuierliche wirksame Konzentration des Katalysators oder der Reaktanden aufrechterhalten wird. Die Zufuhr des Katalysators und der Reaktanden kann echt kontinuierlich oder in relativ eng beabstandeten Inkrementen erfolgen. Gleichermaßen kann eine kontinuierliche Starterzugabe echt kontinuierlich sein oder in Inkrementen erfolgen. Es würde nicht vom vorliegenden Verfahren abweichen, einen Katalysator oder Reaktanden inkrementell so zuzugeben, dass die Konzentration der zugegebenen Materialien für einige Zeit vor der nächsten inkrementellen Zugabe im Wesentlichen auf null abfällt. Es ist jedoch bevorzugt, dass die Katalysatorkonzentration während des Hauptteils des Verlaufs der kontinuierlichen Reaktion im Wesentlichen auf derselben Konzentration gehalten wird und dass Startersubstanz während des Hauptteils des Polymerisations-Verfahrens vorhanden ist. Eine inkrementelle Zugabe von Katalysator und/oder Reaktand, der die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem vorherigen Punkt im Verfahren zurückgeführt wird, wodurch durch inkrementelle Zugaben bewirkte Diskontinuitäten geglättet werden.

### H-funktionelle Startersubstanz

Als geeignete H-funktionelle Startersubstanz ("Starter") können Verbindungen mit für die Alkoxylierung aktiven H-Atomen eingesetzt werden, die eine Molmasse von 18 bis 4500 g/mol, bevorzugt von 62 bis 500 g/mol und besonders bevorzugt von 62 bis 182 g/mol aufweisen.

Für die Alkoxylierung aktive Gruppen mit aktiven H-Atomen sind beispielsweise -OH, -NH$_2$ (primäre Amine), -NH- (sekundäre Amine), -SH und -CO$_2$H, bevorzugt sind -OH, -NH$_2$ und -CO$_2$H, besonders bevorzugt ist -OH. Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF® der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C$_1$-C$_{24}$ Alkyl-Fettsäureester, die im Mittel mindestens 2 OH-Gruppen pro Molekül enthalten und Wasser, eingesetzt. Beispielhaft handelt es sich bei den C$_1$-C$_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Startersubstanz können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Dodecanol, Tetradecanol, Hexadecanol, Octadecanol, Eicosanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als mono funktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als Carbonsäuren seien genannt: Ameisensäure, Essigsäure, Propionsäure, Buttersäure, Acrylsäure, Oxalsäure, Malonsäure, Bernsteinsäure, Glutarsäure, Adipinsäure, Pimelinsäure, aromatische Carbonsäuren wie Benzoesäure, Terephthalsäure, Tetrahydrophthalsäure, Phthalsäure oder Isophthalsäure, Fettsäuren wie Stearinsäure, Palmitinsäure, Ölsäure, Linolsäure oder Linolensäure.

Als H-funktionelle Startersubstanz geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton.

Die H-funktionelle Startersubstanz kann auch aus der Substanzklasse der Polyetherpolyole ausgewählt sein, die ein Molekulargewicht $M_n$ im Bereich von 18 bis 4500 g/mol und eine Funktionalität von 2 bis 3 aufweisen. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln.

Die H-funktionelle Startersubstanz kann auch aus der Substanzklasse der Polyesterpolyole ausgewählt sein. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole, die ebenfalls als Startersubstanzen zur Herstellung der Polyethercarbonatpolyole dienen können.

Des Weiteren können als H-funktionelle Startersubstanz Polycarbonatdiole eingesetzt werden, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177.

In einer weiteren Ausführungsform der Erfindung können Polyethercarbonatpolyole als H-funktionelle Startersubstanz eingesetzt werden. Insbesondere werden Polyethercarbonatpolyole, die nach dem hier beschriebenen erfindungsgemäßen Verfahren erhältlich sind, eingesetzt. Diese als H-funktionelle Startersubstanz eingesetzten Polyethercarbonatpolyole werden hierzu in einem separaten Reaktionsschritt zuvor hergestellt.

Die H-funktionelle Startersubstanz weist im Allgemeinen eine Funktionalität (d.h. Anzahl an für die Polymerisation aktiven H-Atomen pro Molekül) von 1 bis 8, bevorzugt von 1 bis 3 auf. Die H-funktionelle Startersubstanz wird entweder einzeln oder als Gemisch aus mindestens zwei H-funktionellen Startersubstanzen eingesetzt.

Besonders bevorzugt handelt es sich bei der H-funktionellen Startersubstanz um mindestens eine Verbindungen ausgewählt aus der Gruppe bestehend aus Wasser, Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht $M_n$ im Bereich von 150 bis 8000 g/mol bei einer Funktionalität von 2 bis 3 und Polyetherpolyole mit einem Molekulargewicht $M_n$ im Bereich von 150 bis 8000 g/mol und einer Funktionalität von 2 bis 3.

Katalysator

Erfindungsgemäß wird als Katalysator mindestens eine Verbindung gemäß der Formel

$$M_nX \qquad (I),$$

wobei

M ausgewählt ist aus den Alkalimetallkationen $Li^+$, $Na^+$, $K^+$ und $Cs^+$,
X ausgewählt ist aus den Anionen $VO_3^-$, $WO_4^{2-}$, $MoO_4^{2-}$ und $VO_4^{3-}$,
n ist 1, wenn X = $VO_3^-$,
n ist 2, wenn X = $WO_4^{2-}$ oder $MoO_4^{2-}$,
n ist 3, wenn X = $VO_4^{3-}$,

eingesetzt. Das Anion X des Katalysators ist bevorzugt $VO_3^-$ oder $VO_4^{3-}$. Als Alkalimetallkation M wird $Li+$, $Na^+$, $K^+$ oder $Cs^+$ eingesetzt, besonders bevorzugt $K^+$ oder $Cs^+$.

Für die Erfindung eingesetzte Katalysatoren sind bevorzugt $Li_2WO_4$, $Na_2WO_4$, $K_2WO_4$, $Cs_2WO_4$, $Li_2MoO_4$, $Na_2MoO_4$, $K_2MoO_4$, $Cs_2MoO_4$, $Li_3VO_4$, $Na_3VO_4$, $K_3VO_4$, $Cs_3VO_4$, $LiVO_3$, $NaVO_3$, $KVO_3$ und $CsVO_3$, besonders bevorzugt $K_3VO_4$, $Cs_3VO_4$, $KVO_3$ und $CsVO_3$.

Die nach dem erfindungsgemäßen Verfahren erhaltenen Polyethercarbonatpolyole können beispielsweise durch Umsetzung mit Di- und/oder Polyisocyanaten zu Polyurethanen weiterverarbeitet werden.

Weitere Anwendungsmöglichkeiten sind in Wasch- und Reinigungsmittelformulierungen, wie beispielsweise für Textil- oder Oberflächenreinigung, Bohrflüssigkeiten, Kraftstoffadditiven, ionischen und nicht-ionischen Tensiden, Dispergiermittel, Schmiermitteln, Prozesschemikalien für die Papier- oder Textilherstellung, kosmetischen Formulierungen, wie beispielsweise in Haut- oder Sonnenschutzcreme oder Haarpflegeprodukten zu finden.

In einer ersten Ausführungsform betrifft die Erfindung ein Verfahren zur Herstellung von Polyethercarbonatpolyolen durch Anlagerung von cyclischen Propylencarbonat an eine H-funktionelle Startersubstanz in Anwesenheit eines Katalysators, dadurch gekennzeichnet, dass
als Katalysator mindestens eine Verbindung gemäß der Formel

$$M_nX \qquad (I),$$

wobei

M ausgewählt ist aus den Alkalimetallkationen $Li^+$, $Na^+$, $K^+$ und $Cs^+$,
X ausgewählt ist aus den Anionen $VO_3^-$, $WO_4^{2-}$, $MoO_4^{2-}$ und $VO_4^{3-}$,
n ist 1, wenn X = $VO_3^-$,
n ist 2, wenn X = $WO_4^{2-}$ oder $MoO_4^{2-}$
n ist 3, wenn X = $VO_4^{3-}$

eingesetzt wird.

In einer zweiten Ausführungsform betrifft die Erfindung ein Verfahren gemäß der ersten Ausführungsform, dadurch gekennzeichnet, dass in Formel (I) X ausgewählt ist aus den Anionen $VO_3^-$ oder $VO_4^{3-}$.

In einer dritten Ausführungsform betrifft die Erfindung ein Verfahren gemäß der ersten oder zweiten Ausführungsform, dadurch gekennzeichnet, dass in Formel (I) M ausgewählt ist aus den Alkalimetallkationen $K^+$ oder $Cs^+$.

In einer vierten Ausführungsform betrifft die Erfindung ein Verfahren gemäß der ersten Ausführungsform, dadurch gekennzeichnet, dass der Katalysator gemäß der Formel (I) mindestens eine Verbindung ist ausgewählt aus der Gruppe bestehend aus $K_3VO_4$, $Cs_3VO_4$, $KVO_3$ und $CsVO_3$.

In einer fünften Ausführungsform betrifft die Erfindung ein Verfahren gemäß einer der Ausführungsformen 1 bis 4, dadurch gekennzeichnet, dass die Anlagerung des cyclischen Propylencarbonats an eine H-funktionelle Startersubstanz bei einer Temperatur von 130°C bis 200°C, bevorzugt 140°C bis 190°C durchgeführt wird.

In einer sechsten Ausführungsform betrifft die Erfindung ein Verfahren gemäß einer der Ausführungsformen 1 bis 5, dadurch gekennzeichnet, dass die H-funktionelle Startersubstanz ein zahlenmittleres Molekulargewicht bis 10.000 g/mol, bevorzugt bis 5.000 g/mol, besonders bevorzugt bis 2.500 g/mol aufweist.

In einer siebten Ausführungsform betrifft die Erfindung ein Verfahren gemäß einer der Ausführungsformen 1 bis 5, dadurch gekennzeichnet, dass die H-funktionelle Startersubstanz ausgewählt ist aus mindestens einer Verbindung der Gruppe bestehend aus Wasser, Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht $M_n$ im Bereich von 150 bis 8000 g/mol bei einer Funktionalität von 2 bis 3 und Polyetherpolyole mit einem Molekulargewicht $M_n$ im Bereich von 150 bis 8000 g/mol und einer Funktionalität von 2 bis 3.

In einer achten Ausführungsform betrifft die Erfindung ein Verfahren gemäß einer der Ausführungsformen 1 bis 7, dadurch gekennzeichnet, dass der Katalysator in einem Anteil von 10 bis 50000 ppm, besonders bevorzugt 20 bis 30000 ppm und höchst bevorzugt 50 bis 20000 ppm vorliegt.

In einer neunten Ausführungsform betrifft die Erfindung ein Verfahren gemäß einer der Ausführungsformen 1 bis 8, dadurch gekennzeichnet, dass ein weiteres cyclisches Carbonat in einem Anteil von höchstens 20 Gew.-%, bezogen auf die Summe des Gesamtgewichts an eingesetztem cyclischen Carbonat, eingesetzt wird.

In einer zehnten Ausführungsform betrifft die Erfindung ein Verfahren gemäß einer der Ausführungsformen 1 bis 8, dadurch gekennzeichnet, dass kein weiteres cyclisches Carbonat eingesetzt wird.

In einer elften Ausführungsform betrifft die Erfindung ein Verfahren gemäß einer der Ausführungsformen 1 bis 10, dadurch gekennzeichnet, dass H-funktionelle Startersubstanz, cyclisches Propylencarbonat und Katalysator kontinuierlich in den Reaktor zudosiert wird.

In einer zwölften Ausführungsform betrifft die Erfindung ein Verfahren gemäß der elften Ausführungsform, dadurch gekennzeichnet, dass das resultierende Produkt kontinuierlich aus dem Reaktor abgeführt wird.

In einer dreizehnten Ausführungsform betrifft die Erfindung ein Polyethercarbonatpolyol erhalten durch ein Verfahren gemäß einer der Ausführungsformen 1 bis 12.

In einer vierzehnten Ausführungsform betrifft die Erfindung die Verwendung des Polyethercarbonatpolyols gemäß der dreizehnten Ausführungsform in Wasch- und Reinigungsmittelformulierungen, Bohrflüssigkeiten, Kraftstoffadditiven, ionischen und nicht-ionischen Tensiden, Dispergiermittel, Schmiermitteln, Prozesschemikalien für die Papier- oder Textilherstellung, kosmetischen Formulierungen oder zur Herstellung von Polyurethanen.

## Experimenteller Teil

Experimentell ermittelte OH-Zahlen wurden gemäß der Vorschrift DIN 53240-2 (November 2007) bestimmt. Das Molekulargewicht $M_n$ der entstandenen Polyethercarbonatpolyole wurde mittels Gelpermeationschromatographie (GPC) bestimmt. Es wurde nach DIN 55672-1 (August 2007): "Gelpermeationschromatographie, Teil 1 - Tetrahydrofuran als Elutionsmittel" vorgegangen und Polystyrolproben mit bekannter Molmasse zur Kalibrierung verwendet.

Der Anteil an eingebautem $CO_2$ im resultierenden Polyethercarbonatpolyol ($CO_2$-Gehalt) wurde mittels $^1$H-NMR Spektroskopie (Firma Bruker, AV III HD 600, 600 MHz; Pulsprogramm zg30, Wartezeit d1: 10s, 64 Scans) bestimmt. Die Probe wurde jeweils in deuteriertem Chloroform gelöst. Die relevanten Resonanzen im $^1$H-NMR Spektrum (bezogen auf TMS = 0 ppm) sind wie folgt: Für gebildete olefinische (Allylalkohol/Ether-Gruppen) werden die Signale bei 6,01-5,88 ppm sowie 5,37-5,10 ppm verwendet (Summe von beiden entspricht einem Integral von 3 Protonen). Das verbleibende monomere Propylencarbonat (Signal bei 1,51-1,49 ppm), für im Polyethercarbonatpolyol eingebautem Kohlendioxid (Resonanzen bei 1,31-1,27 und ggf.), Polyetherpolyol (d.h. ohne eingebautem Kohlendioxid) mit Resonanzen bei 1,14-1,10 ppm.

Der Molenanteil des im Polymer eingebauten Carbonats in der Reaktionsmischung wird nach Formel (II) wie folgt berechnet, wobei folgende Abkürzungen verwendet werden:

F(6,01-5,88)    = Fläche der Resonanz bei 6,01-5,88 ppm für olefinische Allylalkohol/Ether Gruppen (1 Protonen)

F(5,37-5,10)    = Fläche der Resonanz bei 5,37-5,10 ppm für olefinische Allylalkohol/Ether Gruppen (2 Protonen)

F(1,51-1,49)    = Fläche der Resonanz bei 1,51-1,49 ppm für cyclisches Carbonat (entspricht 3 Protonen)

F(1,31-1,27) = Fläche der Resonanz bei 1,31-1,27 ppm für Polyethercarbonatpolyol (entspricht 3 Protonen)

F(1,14-1,10) = Fläche der Resonanz bei 1,14-1,10 ppm für Polyetherpolyol (entspricht 3 Protonen)

Unter Berücksichtigung der relativen Intensitäten wurde gemäß der folgenden Formel (II) für das polymer gebundene Carbonat ("lineares Carbonat" LC) in der Reaktionsmischung in mol% umgerechnet:

$$LC_{mol\%} = \frac{F(1,31\text{-}1,27)}{F(1,51\text{-}1,49)+F(1,31\text{-}1,27)+F(1,14\text{-}1,10)+F(6,01\text{-}5,88)+F(5,37\text{-}5,10)} \cdot 100\ \% \qquad (II)$$

Der Gewichtsanteil (in Gew.-%) polymer-gebundenen Carbonats (LC') in der Reaktionsmischung wurde nach Formel (III) berechnet,

$$LC'_{gew.\%} = \frac{[F(1,31\text{-}1,27)] \cdot 102}{N} \cdot 100\ \% \qquad (III)$$

wobei sich der Wert für $N$ ("Nenner" $N$) nach Formel (IV) berechnet:

$$N = (F(1,51\text{-}1,49) + F(1,51\text{-}1,49)) \cdot 102 + F(1,14\text{-}1,10) \cdot 58 + (F(6,01\text{-}5,88) + F(5,37\text{-}5,10)) * 44 \qquad (IV)$$

Der Faktor 102 resultiert aus der Summe der Molmassen von $CO_2$ (Molmasse 44 g/mol) und der von Propylenoxid (Molmasse 58 g/mol). Der Faktor 44 resultiert aus der Molmasse von Allylalkohol (44 g/mol)
Der Gewichtsanteil (in Gew.-%) an $CO_2$ im Polyethercarbonatpolyol wurde nach Formel (V) berechnet:

$$CO_{2\,gew.\%} = LC_{gew.\%} \cdot \frac{44}{102} \qquad (V)$$

Der molare Gehalt (in mol%) an olefinischen Produkten (Allylalkohol/Ether-Produkten) (OL) wurde gemäß der folgenden Formel bestimmt (VI)

$$OL_{mol\%} = \frac{F(6,01\text{-}5,88)+F(5,37\text{-}5,10)}{F(1,51\text{-}1,49)+F(1,31\text{-}1,27)+F(1,14\text{-}1,10)+F(6,01\text{-}5,88)+F(5,37\text{-}5,10)} \cdot 100\ \% \qquad (VI)$$

Der Gewichtsanteil (in Gew.-%) olefinischer Produkte (Allylalkohol/Ether-Produkte) (OL') in der Reaktionsmischung wurde nach Formel (VII) berechnet,

$$OL'_{gew.\%} = \frac{[F(6,01\text{-}5,88)+F(5,37\text{-}5,10)]\,44}{N} \cdot 100\ \% \qquad (VII)$$

wobei sich der Wert für $N$ ("Nenner" $N$) nach Formel (IV) berechnet.
Um aus den Werten der Zusammensetzung der Reaktionsmischung die Zusammensetzung bezogen auf den Polymer-Anteil (bestehend aus Polyethercarbonatpolyol, aufgebaut aus Starter, cyclischem Propylencarbonat, wurden die Nicht-Polymer-Bestandteile der Reaktionsmischung (d.h. nicht umgesetztes cyclisches Propylencarbonat) rechnerisch eliminiert. Der Gewichtsanteil der Carbonat-Wiederholungseinheiten im Polyethercarbonatpolyol wurde in einen Gewichtsanteil Kohlendioxid mittels des Faktors F=44/(58+44) umgerechnet (Siehe Formel V). Die Angabe des $CO_2$-Gehalts im Polyethercarbonatpolyol ("eingebautes $CO_2$"; siehe nachfolgende Beispiele) ist normiert auf das Polyethercarbonatpolyol-Molekül, dass bei der ringöffnenden Polymerisation entstanden ist.

Eingesetzte Rohstoffe:

Alle aufgezählten Chemikalien wurden vom genannten Hersteller in der angegebenen Reinheit erworben und ohne weitere Behandlung für die Synthese von Polyethercarbonatpolyolen verwendet.

| | |
|---|---|
| Natriumorthovanadat ($Na_3VO_4$): | Sigma-Aldrich 99,98 % |
| Kaliumorthovanadat ($K_3VO_4$): | ABCR 99,9 % |
| Cäsiumorthovanadat ($Cs_3VO_4$): | ABCR 99,9 % |
| Kaliummetavanadat ($KVO_3$): | Sigma-Aldrich 98 % |
| Cäsiummetavanadat ($CsVO_3$): | Sigma-Aldrich >99,9 % |
| Kaliumcarbonat ($K_2CO_3$): | Bernd Kraft >99 % |
| Cäsiumcarbonat ($Cs_2CO_3$): | Sigma-Aldrich >99,9 % |
| Cyclisches Propylencarbonat (cPC): | Sigma-Aldrich 99 % |
| 1,6-Hexandiol: | Sigma-Aldrich 99 % |
| Ammoniummetavanadat ($NH_4VO_3$): | ABCR >99,9 % |
| Calciummetavanadat ($Ca(VO_3)_2$): | ABCR 99.8 % |
| Natriumstannat trihydrat ($Na_2SnO_3 \cdot 3H_2O$): | Sigma-Aldrich >98 % |

**Beispiel 1: Darstellung von Polyethercarbonatpolyolen durch ringöffnende Polymerisation von cyclischem Propylencarbonat in Gegenwart von 1,6-Hexandiol als Starter und $Na_3VO_4$ als Katalysator**

Ein 500 mL Vierhalsglaskolben wurde mit Rückflusskühler, KPG-Rührer, Thermofühler, Stickstoffzuleitung und Gasaustritt/Gasabfuhr mit Überdruckventil ausgestattet. Anschließend wurden 200 g cyclisches Propylencarbonat, 34,25 g 1,6-Hexandiol und 1,8 g $Na_3VO_4$ eingewogen. Für 30 Minuten wurde 10 L/h Stickstoff eingeleitet wobei die Suspension dabei mit 300 U/min gerührt wurde. Im Anschluss wurde die Suspension stufenweise auf 180°C aufgeheizt. Der entstehende Gasstrom wurde nach dem Rückflusskühler durch einen Blasenzähler abgelassen.

Die Reaktionsmischung wurde so lange bei der eingestellten Temperatur gehalten, bis die Gasentwicklung zum Erliegen kommt.

Der im Polyethercarbonatpolyol eingebaute $CO_2$-Anteil, der Olefin/Allylalkohol/Ether-Gehalt wurde nach den zuvor beschriebenen Methoden mittels $^1$H-NMR Spektroskopie ermittelt. Das Molekulargewicht wurde mittels Gelpermeationschromatographie bestimmt.

Die Eigenschaften des resultierenden Polyethercarbonatpolyols sind in Tabelle 1 dargestellt.

**Beispiel 2: Darstellung von Polyethercarbonatpolyolen durch ringöffnende Polymerisation von cyclischem Propylencarbonat in Gegenwart von 1,6-Hexandiol als Starter und $K_3VO_4$ als Katalysator**

Die Reaktion wurde analog zu Beispiel 1 durchgeführt, wobei 2,3 g $K_3VO_4$ an Stelle von $Na_3VO_4$ als Katalysator eingesetzt wurden.

Die Eigenschaften des resultierenden Polyethercarbonatpolyols sind in Tabelle 1 dargestellt.

**Beispiel 3: Darstellung von Polyethercarbonatpolyolen durch ringöffnende Polymerisation von cyclischem Propylencarbonat in Gegenwart von 1,6-Hexandiol als Starter und $Cs_3VO_4$ als Katalysator**

Die Reaktion wurde analog zu Beispiel 1 durchgeführt, wobei 5,3 g $Cs_3VO_4$ an Stelle von $Na_3VO_4$ als Katalysator eingesetzt wurden.

Die Eigenschaften des resultierenden Polyethercarbonatpolyols sind in Tabelle 1 dargestellt.

**Beispiel 4: Darstellung von Polyethercarbonatpolyolen durch ringöffnende Polymerisation von cyclischem Propylencarbonat in Gegenwart von 1,6-Hexandiol als Starter und $NaVO_3$ als Katalysator**

Die Reaktion wurde analog zu Beispiel 1 durchgeführt, wobei 1,2 g $NaVO_3$ an Stelle von $Na_3VO_4$ als Katalysator eingesetzt wurden.

Die Eigenschaften des resultierenden Polyethercarbonatpolyols sind in Tabelle 1 dargestellt.

**Beispiel 5: Darstellung von Polyethercarbonatpolyolen durch ringöffnende Polymerisation von cyclischem Propylencarbonat in Gegenwart von 1,6-Hexandiol als Starter und $KVO_3$ als Katalysator**

Die Reaktion wurde analog zu Beispiel 1 durchgeführt, wobei insgesamt 32,9 g 1,6-Hexandiol als H-funktionelle Startersubstanz und 1,4 g $KVO_3$ an Stelle von $Na_3VO_4$ als Katalysator eingesetzt wurden. Die Eigenschaften des resultierenden Polyethercarbonatpolyols sind in Tabelle 1 dargestellt.

**Beispiel 6: Darstellung von Polyethercarbonatpolyolen durch ringöffnende Polymerisation von cyclischem Propylencarbonat in Gegenwart von 1,6-Hexandiol als Starter und CsVO$_3$ als Katalysator**

Die Reaktion wurde analog zu Beispiel 1 durchgeführt, wobei 2,3 g CsVO$_3$ an Stelle von Na$_3$VO$_4$ als Katalysator eingesetzt wurden.

Die Eigenschaften des resultierenden Polyethercarbonatpolyols sind in Tabelle 1 dargestellt.

**Beispiel 7 : Darstellung von Polyethercarbonatpolyolen durch ringöffnende Polymerisation von cyclischem Propylencarbonat in Gegenwart von Diethylenglycol als Starter und Natriumstannat Trihydrat als Katalysator**

Die Reaktion wurde analog zu Beispiel 1 durchgeführt, wobei insgesamt 150 g cPC, 7,7 g Diethylenglykol als H-funktionelle Startersubstanz und 1,6 g Na$_2$SnO$_3$·3H$_2$O an Stelle von Na$_3$VO$_4$ als Katalysator eingesetzt wurden.

Die Eigenschaften des resultierenden Polyethercarbonatpolyols sind in Tabelle 1 dargestellt.

**Beispiel 8: Darstellung von Polyethercarbonatpolyolen durch ringöffnende Polymerisation von cyclischem Propylencarbonat in Gegenwart von 1,6-Hexandiol als Starter und K$_2$CO$_3$ als Katalysator**

Die Reaktion wurde analog zu Beispiel 1 durchgeführt, wobei insgesamt 34,7 g 1,6-Hexandiol als H-funktionelle Startersubstanz und 1,4 g K$_2$CO$_3$ an Stelle von Na$_3$VO$_4$ als Katalysator eingesetzt wurden. Die Eigenschaften des resultierenden Polyethercarbonatpolyols sind in Tabelle 1 dargestellt.

**Beispiel 9: Darstellung von Polyethercarbonatpolyolen durch ringöffnende Polymerisation von cyclischem Propylencarbonat in Gegenwart von 1,6-Hexandiol als Starter und Cs$_2$CO$_3$ als Katalysator**

Die Reaktion wurde analog zu Beispiel 1 durchgeführt, wobei insgesamt 34,7 g 1,6-Hexandiol als H-funktionelle Startersubstanz und 3,2 g Cs$_2$CO$_3$ an Stelle von Na$_3$VO$_4$ als Katalysator eingesetzt wurden.

Die Eigenschaften des resultierenden Polyethercarbonatpolyols sind in Tabelle 1 dargestellt.

**Beispiel 10: Darstellung von Polyethercarbonatpolyolen durch ringöffnende Polymerisation von cyclischem Propylencarbonat in Gegenwart von 1,6-Hexandiol als Starter und NH$_4$VO$_3$ als Katalysator**

Die Reaktion wurde analog zu Beispiel 1 durchgeführt, wobei insgesamt 34,7 g 1,6-Hexandiol als H-funktionelle Startersubstanz und 1,2 g NH$_4$VO$_3$ an Stelle von Na$_3$VO$_4$ als Katalysator eingesetzt wurden.

Es wurde kein Polyethercarbonatpolyol erhalten.

**Beispiel 11: Darstellung von Polyethercarbonatpolyolen durch ringöffnende Polymerisation von cyclischem Propylencarbonat in Gegenwart von 1,6-Hexandiol als Starter und Ca(VO$_3$)$_2$ als Katalysator**

Die Reaktion wurde analog zu Beispiel 1 durchgeführt, wobei insgesamt 34,7 g 1,6-Hexandiol als H-funktionelle Startersubstanz und 2,3 g Ca(VO$_3$)$_2$ an Stelle von Na$_3$VO$_4$ als Katalysator eingesetzt wurden.

Es wurde kein Polyethercarbonatpolyol erhalten.

**Tabelle 1:**

| Beispiel | Katalysator | CO$_2$ [Gew.%] | Olefin/Allyl [Gew.%] | Molekulargewicht M$_n$ [g/mol] | Umsatz (cPC) [%] |
|---|---|---|---|---|---|
| 1 | Na$_3$VO$_4$ | 20 | 0 | 419 | 87 |
| 2 | K$_3$VO$_4$ | 17 | 0 | 448 | >99 |
| 3 | Cs$_3$VO$_4$ | 19 | 0 | 400 | >99 |
| 4 | NaVO$_3$ | 18 | 0 | 408 | 89 |
| 5 | KVO$_3$ | 15 | 0 | 436 | >99 |
| 6 | CsVO$_3$ | 16 | 0 | 452 | >99 |
| 7* | Na$_2$SnO$_3$·3H$_2$O | 8 | 16 | 238 | 87 |

(fortgesetzt)

| Beispiel | Katalysator | $CO_2$ [Gew.%] | Olefin/Allyl [Gew.%] | Molekulargewicht $M_n$ [g/mol] | Umsatz (cPC) [%] |
|---|---|---|---|---|---|
| 8* | $K_2CO_3$ | 8 | 4 | 383 | 99 |
| 9* | $Cs_2CO_3$ | 7 | 12 | 363 | >99 |
| 10* | $NH_4VO_3$ | kein Produkt entstanden | | | |
| 11* | $Ca(VO_3)_2$ | kein Produkt entstanden | | | |
| * Vergleichsbeispiel | | | | | |

Wie in Tabelle 1 zu erkennen, führen die in den Beispielen 1 bis 8 eingesetzten Katalysatoren zur Anlagerung von cyclischen Propylencarbonat an eine H-funktionelle Startersubstanz, wobei der Einsatz von $NH_4VO_3$ und $Ca(VO_3)_2$ als Katalysator (Beispiele 9 und 10) zu keinem Polyethercarbonatpolyol führt. Die erfindungsgemäßen Katalysatoren führen zu einem erhöhten Einbau von cyclischen Propylencarbonat in die Polyethercarbonatpolyole der Beispiele 1 bis 5. Zusätzlich führt die Verwendung von nicht erfindungsgemäßen Katalysatoren zur Bildung von Olefin-(Allylalkohol-/ ether) Nebenprodukten bei der Herstellung von Polyethercarbonatpolyolen über die Anlagerung von cyclischen Propylencarbonat an H-funktioneller Startersubstanz. Weiterhin resultiert die Verwendung von nicht erfindungsgemäßen Katalysatoren zu Polyethercarbonatpolyolen mit niedrigeren Molekulargewichten (Beispiele 6, 7 und 8) aufgrund der auftretenden Nebenreaktionen des cyclischen Propylencarbonats.

In einer bevorzugten Ausführungsform der Erfindung werden für die erfindungsgemäßen Katalysatoren $K^+$ oder $Cs^+$ als Alkalimetallkation M eingesetzt. Die Verwendung von Katalysatoren dieser bevorzugten Ausführungsform resultiert in einem höheren Umsatz von cPC im Verfahren.

**Patentansprüche**

1. Verfahren zur Herstellung von Polyethercarbonatpolyolen durch Anlagerung von cyclischen Propylencarbonat an eine H-funktionelle Startersubstanz in Anwesenheit eines Katalysators, **dadurch gekennzeichnet, dass** als Katalysator mindestens eine Verbindung gemäß der Formel

$$M_nX \qquad (I),$$

wobei

M ausgewählt ist aus den Alkalimetallkationen $Li^+$, $Na^+$, $K^+$ und $Cs^+$,
X ausgewählt ist aus den Anionen $VO_3^-$, $WO_4^{2-}$, $MoO_4^{2-}$ und $VO_4^{3-}$,
n ist 1, wenn X = $VO_3^-$,
n ist 2, wenn X = $WO_4^{2-}$ oder $MoO_4^{2-}$
n ist 3, wenn X = $VO_4^{3-}$

eingesetzt wird.

2. Verfahren gemäß Anspruch 1, **dadurch gekennzeichnet, dass** in Formel (I) X ausgewählt ist aus den Anionen $VO_3^-$ oder $VO_4^{3-}$.

3. Verfahren gemäß Anspruch 1 oder 2, **dadurch gekennzeichnet, dass** in Formel (I) M ausgewählt ist aus den Alkalimetallkationen $K^+$ oder $Cs^+$.

4. Verfahren gemäß Anspruch 1, **dadurch gekennzeichnet, dass** der Katalysator gemäß der Formel (I) mindestens eine Verbindung ist ausgewählt aus der Gruppe bestehend aus $K_3VO_4$, $Cs_3VO_4$, $KVO_3$ und $CsVO_3$.

5. Verfahren gemäß einem der Ansprüche 1 bis 4, **dadurch gekennzeichnet, dass** die Anlagerung des cyclischen Propylencarbonats an eine H-funktionelle Startersubstanz bei einer Temperatur von 130°C bis 200°C, bevorzugt 140°C bis 190°C durchgeführt wird.

6. Verfahren gemäß einem der Ansprüche 1 bis 5, **dadurch gekennzeichnet, dass** die H-funktionelle Startersubstanz ein zahlenmittleres Molekulargewicht bis 10.000 g/mol, bevorzugt bis 5.000 g/mol, besonders bevorzugt bis 2.500 g/mol aufweist.

7. Verfahren gemäß einem der Ansprüche 1 bis 5, **dadurch gekennzeichnet, dass** die H-funktionelle Startersubstanz ausgewählt ist aus mindestens einer Verbindung der Gruppe bestehend aus Wasser, Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht $M_n$ im Bereich von 150 bis 8000 g/mol bei einer Funktionalität von 2 bis 3 und Polyetherpolyole mit einem Molekulargewicht $M_n$ im Bereich von 150 bis 8000 g/mol und einer Funktionalität von 2 bis 3.

8. Verfahren gemäß einem der Ansprüche 1 bis 7, **dadurch gekennzeichnet, dass** der Katalysator in einem Anteil von 10 bis 50000 ppm, besonders bevorzugt 20 bis 30000 ppm und höchst bevorzugt 50 bis 20000 ppm vorliegt.

9. Verfahren gemäß einem der Ansprüche 1 bis 8, **dadurch gekennzeichnet, dass** ein weiteres cyclisches Carbonat in einem Anteil von höchstens 20 Gew.-%, bezogen auf die Summe des Gesamtgewichts an eingesetztem cyclischen Carbonat, eingesetzt wird.

10. Verfahren gemäß einem der Ansprüche 1 bis 8, **dadurch gekennzeichnet**, **dadurch gekennzeichnet, dass** kein weiteres cyclisches Carbonat eingesetzt wird.

11. Verfahren gemäß einem der Ansprüche 1 bis 10, **dadurch gekennzeichnet, dass** H-funktionelle Startersubstanz, cyclisches Propylencarbonat und Katalysator kontinuierlich in den Reaktor zudosiert wird.

12. Verfahren gemäß Anspruch 11, **dadurch gekennzeichnet, dass** das resultierende Produkt kontinuierlich aus dem Reaktor abgeführt wird.

13. Polyethercarbonatpolyol erhalten durch ein Verfahren gemäß einem der Ansprüche 1 bis 12.

14. Verwendung des Polyethercarbonatpolyols gemäß Anspruch 13 in Wasch- und Reinigungsmittelformulierungen, Bohrflüssigkeiten, Kraftstoffadditiven, ionischen und nicht-ionischen Tensiden, Dispergiermittel, Schmiermitteln, Prozesschemikalien für die Papier- oder Textilherstellung, kosmetischen Formulierungen oder zur Herstellung von Polyurethanen.

**Europäisches Patentamt**
**European Patent Office**
**Office européen des brevets**

# EUROPÄISCHER RECHERCHENBERICHT

**Nummer der Anmeldung**

EP 19 19 2406

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | KAZUO SOGA ET AL: "Polymerization of propylene carbonate", JOURNAL OF POLYMER SCIENCE, POLYMER CHEMISTRY EDITION., Bd. 15, Nr. 1, 1. Januar 1977 (1977-01-01), Seiten 219-229, XP055587465, US ISSN: 0360-6376, DOI: 10.1002/pol.1977.170150120 * das ganze Dokument * ----- | 1-14 | INV. C08G64/30 C08G18/44 ADD. C08G65/26 |

**RECHERCHIERTE SACHGEBIETE (IPC)**

C08G

Der vorliegende Recherchenbericht wurde für alle Patentansprüche erstellt

| Recherchenort | Abschlußdatum der Recherche | Prüfer |
|---|---|---|
| Den Haag | 17. September 2019 | Hoffmann, Michael |

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0343572 A
- DE 2523352
- DE 1495299 A1
- EP 1359177 A

**In der Beschreibung aufgeführte Nicht-Patentliteratur**

- **HARRIS, R. F.** Structural Features of Poly(alkylene Ether Carbonate) Diol Oligomers by Capillary Gas Chromatography. *Journal of Applied Polymer Science,* 1989, vol. 37, 183-200
- **K. SOGA ; Y. TAZUKE ; S. HOSADA ; S. IKEDA.** Polymerization of Propylene Carbonate. *J. Polym. Sci.,* 1977, vol. 15, 219-229
- **G. ROKICKI.** Aliphatic cyclic carbonates and spiroorthocarbonates as monomers. *Prog. Polym. Sci.,* 2000, vol. 25, 259-342